# EUROPEAN PATENT SPECIFICATION

(11) **EP 3 840 346 B1**
(45) Date of publication and mention of the grant of the patent: **29.11.2023**
(21) Application number: 19891232.1
(22) Date of filing: 15.10.2019
(51) Int. Cl.: H04M 1/725, G06F 3/048

(54) **CONTROL OPERATING METHOD AND ELECTRONIC APPARATUS**
STEUERUNGSBETRIEBSVERFAHREN UND ELEKTRONISCHE VORRICHTUNG
PROCÉDÉ DE FONCTIONNEMENT DE COMMANDE ET APPAREIL ÉLECTRONIQUE

(30) Priority: 27.11.2018 CN 201811426955
(43) Date of publication of application: 23.06.2021
(73) Proprietor: ZTE Corporation, Shenzhen, Guangdong 518057 (CN)
(72) Inventor: YANG, Zaijun, Shenzhen, Guangdong 518057 (CN); ZHU, Yong, Shenzhen, Guangdong 518057 (CN); JIANG, Changdong, Shenzhen, Guangdong 518057 (CN)
(74) Representative: Novagraaf Technologies
(86) International application number: PCT/CN2019/111340
(87) International publication number: WO 2020/108139

(56) References cited:
- WO-A1-2010/138360
- CN-A- 102 411 472
- CN-A- 103 064 591
- CN-A- 103 713 809
- CN-A- 105 224 187
- US-A1- 2010 281 374
- US-A1- 2013 311 948
- US-A1- 2014 189 570
- US-A1- 2014 365 973
- US-A1- 2015 350 143
- US-B1- 6 512 527
- US-B1- 10 019 133

## Description

### TECHNICAL FIELD

The present disclosure relates to the field of communication technology, in particular, to a control operating method and electronic apparatus.

### BACKGROUND

When a user uses a smart phone, functional menu selection or mode switching is generally performed by touching functional buttons on a display screen. For example, after the user clicks a button on a mobile phone interface, a corresponding option box will pop up for the user to choose from various options. After the user selects one option, the interface returns and executes a function of the option (for example, switching mode or changing navigation, etc.), or directly displays all the options on the mobile phone interface, and the user choose one option to execute the corresponding function of the option.

However, an existing button operation method requires a click operation in different regions, so operation efficiency is relatively low. In addition, displaying of all options on the mobile phone interface takes up a lot of interface space, and because there is no clear operation prompt and the like, the operation is not intuitive.

WO 2010138360A1 discloses several techniques for manipulating radial menus in graphical user interfaces of an application. The radial menus include multiple selectable items arranged about an internal location. US6512527B1 discloses an avionics display graphical user interface where a mere series of clicks will advance a selection highlight mark of selectable menu items.

### SUMMARY

The present invention is set out in the appended set of claims.

### BRIEF DESCRIPTION OF THE DRAWINGS

Drawings described herein provide a further understanding on the present disclosure, forming a part of the present disclosure. Exemplary embodiments and description in the present disclosure are for explaining the present disclosure and do not constitute a limitation to the present disclosure.
FIG. 1 is a flowchart of a button operation method according to certain embodiments of the present disclosure.
FIG. 2 is a schematic diagram showing a state change in menu items according to certain embodiments of the present disclosure.
FIG. 3 is a schematic diagram showing a switching mode change according to certain embodiments of the present disclosure.
FIG. 4 is a schematic diagram showing a switching mode change according to Embodiment 1 of the present disclosure.
FIG. 5 is a schematic diagram showing a switching mode change according to Embodiment 2 of the present disclosure.
FIG. 6 is a schematic diagram showing a switching mode change according to Embodiment 3 of the present disclosure.
FIG. 7 is a schematic diagram showing a switching mode change according to Embodiment 4 of the present disclosure.
FIG. 8 is a schematic diagram showing a prompt of a number of clicks according to Embodiment 5 of the present disclosure.
FIG. 9 is a schematic diagram showing a switching mode change according to Embodiment 6 of the present disclosure.
FIG. 10 is a schematic diagram showing a switching direction according to Embodiment 7 of the present disclosure.
FIG. 11 is a schematic diagram showing expansion of menu items according to Embodiment 8 of the present disclosure.
FIG. 12 is a schematic diagram showing menu traversal according to Embodiment 9 of the present disclosure.
FIG. 13 is a schematic diagram showing switching of desk-top applications according to Embodiment 10 of the present disclosure.
FIG. 14 is a schematic diagram showing switching of a camera mode according to Embodiment 11 of the present disclosure.
FIG. 15 is a schematic diagram showing an electronic device structure according to certain embodiments of the present disclosure.

### DETAILED DESCRIPTION

The present application will be described in detail in embodiments with reference to the drawings. It is to be noted that the embodiments and features in the embodiments in the present disclosure may be combined to derive other embodiments not explicitly described.

It is to be noted that such terms as "first" and "second" in the specification, Claims and the drawings of the present disclosure mean to distinguish similar objects rather than to describe a particular order or sequence.

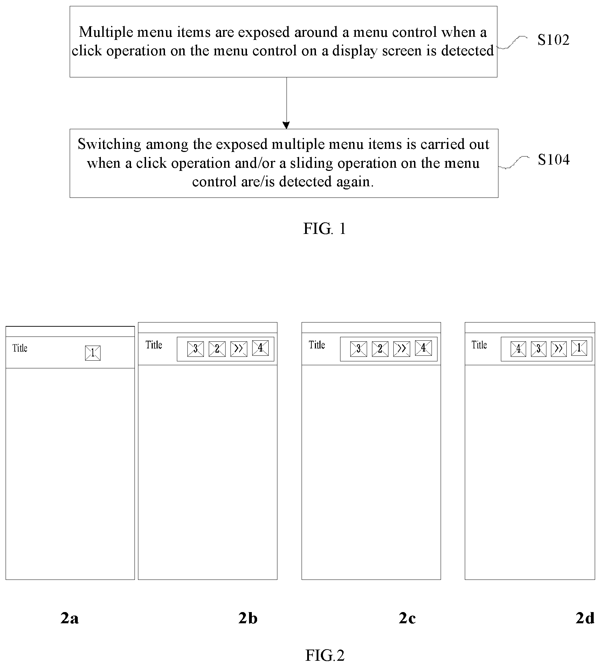

An embodiment of the present disclosure provides a control operation method. FIG. 1 is a flowchart of a button operation method according to an embodiment of the present disclosure. As shown in FIG. 1, the flowchart may include the following steps.

In step S102, multiple menu items are exposed around a menu control when a click operation on the menu control on a display screen is detected.

In one embodiment, the menu control displayed on the display screen may be a randomly applicable control icon, for example, an icon button or a text button, having a plurality of items. The multiple menu items may be expanded at the original position of a clicked button (i.e., an original button is displayed as one menu item thereof) or may be expanded around the clicked button in a regular or irregular shape. For example, the multiple menu items are expanded around the clicked button in a horizontal or longitudinal direction, or in a shape such as a ring or a circle. In this embodiment, the multiple menu items as displayed may be a menu of a same grade as that of the menu control. For example, the menu control corresponds to one navigation mode. When the menu control is clicked, all navigation modes are displayed in the expanding manner. In some embodiments, the multiple menu items displayed in the expanding manner may be sub-menus of the menu control. For example, the menu control corresponds to a film icon. When the menu control is clicked, all film modes are displayed in the expanding manner.

In step S104, switching among the exposed multiple menu items is carried out when a click operation and/or a sliding operation on the menu control are/is detected again. In this step, a user needs only to perform a further operation based on an original menu control, for example, to click or to slide to realize switching among expanded menu items rather than performing clicking or sliding in a plurality of regions, thereby operation efficiency is improved.

It shall be noted that after step S104, the control operation method may further include: selecting a menu item latest switched to, if an operation on the menu control is not detected within a predetermined time period, or if a determination operation on the menu control is detected. In this embodiment, there may be a plurality of manners of determination operation on the menu control. For example, the determination operation may be a click operation in a blank region beside the menu control, or a click operation on a fixed entity or a virtual determination button. In addition, "selecting" in this embodiment may be understood as executing a corresponding instruction of the menu item, for example, displaying an interface corresponding to the menu item, or switching to a mode corresponding to the menu item, or performing a function corresponding to the menu item and the like.

In the following, this embodiment will be described in detail from a user's point of view. As shown in FIG. 2, the icon buttons have four states which are, in order, an initial state (FIG. 2a), an expanding state (FIG. 2b), a switching state (FIG. 2c) and an ending state (FIG. 2d).

At the initial state in FIG. 2a, the icon button is not distinguished from a common button (which is not limited to a form of the icon button, and is applicable to a text button or another button). After the user clicks the icon button, the expanding state is displayed as shown in FIG. 2b. An entire expanded sub-menu group includes four items. The user may switch among the four items to execute a corresponding instruction (i.e., the user may perform mode switching, navigation switching or other operations). Herein, four items are clearly shown. If the user continues to click anyone of the buttons, any option may be selected and switched to (FIG. 2c), and a final result is shown in FIG. 2d.

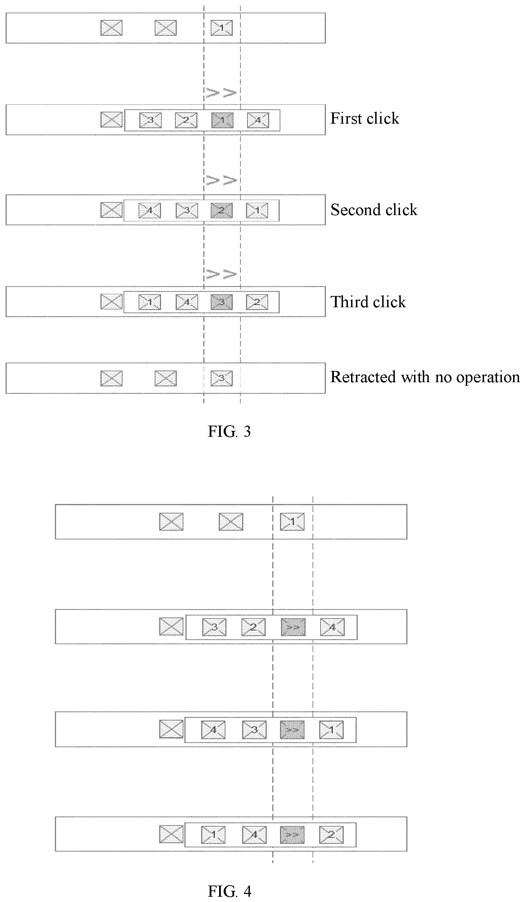

In this embodiment, the four items in FIG. 2b are expanded from an original position of the icon button. That is, after being expanded, menu item 1 (i.e., the menu item shown with a direction in FIG. 2b) is in the same position as the clicked icon button (menu item 1 as shown in FIG. 2a) in FIG. 2a. When the user continuously clicks in the menu items, the four states as shown in FIGs. 2a to 2d may be switched continuously. For example, menu buttons with continuous changing are displayed as menu item 1 to menu item 4. As a click operation on a menu button may be continuously and periodically displayed, in a case where there is no operation, a mode in which a button latest clicked may be automatically switched to. An entire switching process is shown in FIG. 3. After a button icon is clicked for the first time, the four items are transversely expanded from the original position of the button icon. After the button icon is clicked for a second time, it is switched from the option 1 to option 2. After the button icon is clicked for a third time, it is switched from the option 2 to option 3. Within a predetermined time period, if the user does not click the button again, the latest switched option 3 is selected, and the state of four items expanded is recovered to the initial state. In this embodiment, the initial state refers to a layout and display positions of the menu buttons before the menu items are expanded. For example, after the menu items are retracted, the display positions of the menu buttons and a number of displayed menu buttons are the same as those before the menu items are expanded, but menu items corresponding to the menu buttons may be the same or different from those before the menu items are expanded.

This embodiment may be compatible with an existing button-clicking manner, i.e., after the buttons are clicked to expand the menu items, the menu items may be processed in a conventional menu processing manner. However, in this embodiment, after a plurality of sub-menus are expanded, in processing of sub-menus it only needs to be clicked at the same position, thereby a switching efficiency of the sub-menus, and the menu items displayed in the expanding manner is very intuitive.

In addition, the sub-menus expanded in this embodiment do not take extra space, but operation thereof is still efficient, and a problem of unclear instruction in the existing technology is avoided.

### Embodiment 1

One problem in the above embodiment is that the user can not clearly know that continuous clicking may be performed to switch modes, which is further optimized in this embodiment. As shown in FIG. 4, after clicking, a button may turn to be a right arrow icon which may be a visual suggestion. It shall be noted that the right arrow is merely an exemplary visual suggestion, but the present disclosure is not limited to this visual suggestion.

### Embodiment 2

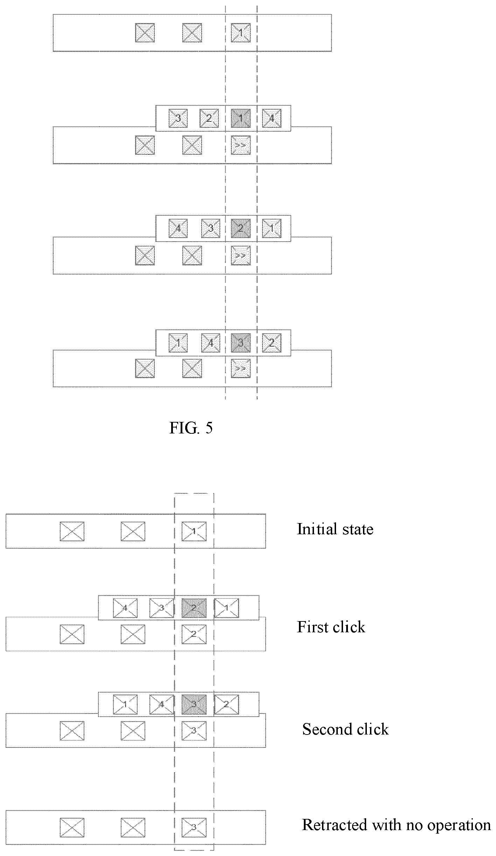

During operation it may occur that the touch screen is covered by a finger and an expanded sub-menu cannot be seen clearly. Therefore, the present disclosure further provides an Embodiment 2. As shown in FIG. 5, in this embodiment, after a button icon is clicked, a visual prompt for an expanded sub-menu appears around the button. In this way, the sub-menu may not be covered by a finger during operation. In this embodiment, the user may click sub-menus at the same position (i.e., the same button icon) to switch among the sub-menus.

### Embodiment 3

As shown in FIG. 6, compared with the previous embodiments, in this embodiment, a next operation is switched to and a prompt occurs right after the first click. Compared with the previous embodiments, one switching operation is omitted in this embodiment and thus efficiency herein is higher.

### Embodiment 4

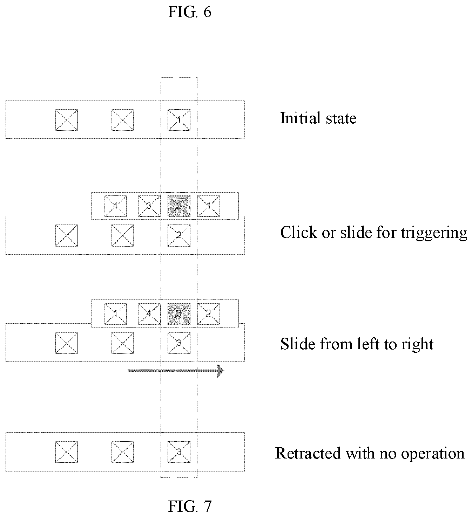

In this embodiment, a sliding operation is introduced based on previous embodiments as shown in FIG. 7. After the sub-menus are expanded, not only may the user perform clicking and switching, a left-and-right sliding at this position may enable a high-efficient switch to a target button. That is to say, a sub-menu 2 or a sub-menu 3 or a sub-menu 4 may be switched to at once. In addition, a two-directional sliding to both left and right may be performed, so that the switching is more flexible. Alternatively, in another embodiment, a sliding operation in a corresponding direction may be performed according to an actual shape of arrangement of the menu items to perform switching.

### Embodiment 5

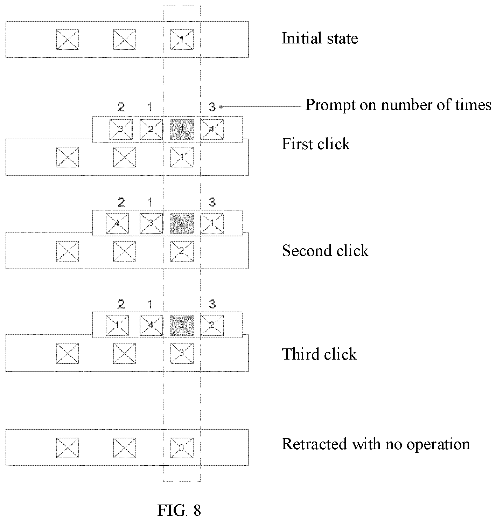

As shown in FIG. 8, in this embodiment, a prompt on the number of times of clicking is introduced on the basis of the previous embodiment, and the user may know how many more clicks is required to switch to another sub-menu through the prompt. For example, in FIG. 8, apart from a current menu item, each of the other menu items display the number of times of clicking required to switch to the menu item. After each click, the number of times changes correspondingly. This embodiment may be advantageous for a highly efficient operation if there are a large number of sub-items. It shall be noted that a prompt of a number of times may not appear to each option, but may appear at some frequency, or may appear to certain important recommended sub-items.

### Embodiment 6

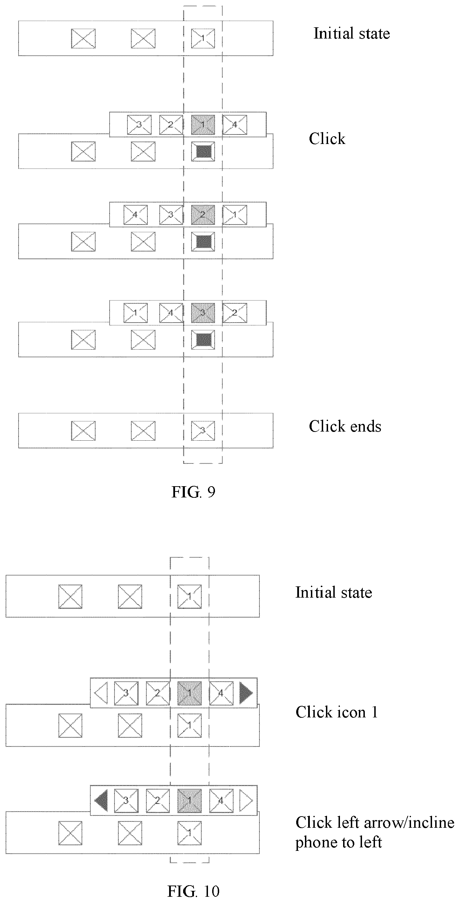

As shown in FIG. 9, in this embodiment after a sub-menu group is expanded and an original click is performed, items 1 to 4 will be switched to successively according to a preset time table. The user may perform clicking again when an option desired by the user is reached, i.e., a switching operation on a sub-option is stopped. In this embodiment, when sub-items 1 to 4 are being switched to, the sub-items 1 to 4 may be automatically switched to without continuous clicking.

### Embodiment 7

In this embodiment, a switching direction and a switching speed between items may be controlled. As shown in FIG. 10, after a first click on a button, a rectangular region is displayed over the button. The region is an expanding region for the menu items, in which expanded menu items 1 to 4 are displayed. In this embodiment, both ends of the expanded region including menu items 1 to 4 are marked with right and left suggestion arrows. The user may perform clicking so as to switch directions. For example, after selecting a left direction arrow, switching will be performed to the left during a next switch. It shall be noted that the suggestion arrow is not limited to being at the two ends of the expanded region, but may be displayed at an appropriate position within the expanded region according to an actual layout.

In addition, it shall be noted that this embodiment is not limited to the above direction switching form. For example, the user may incline a phone in the switching mode, an incline of the phone can be sensed through a gyro set in the phone to control a switching direction of menu items.

Concerning speed control, in this embodiment, a switching speed may be controlled through the gyro set in the phone. Alternatively, on a pressure screen, a control on switching speed may be performed according to pressure levels to achieve fast forwarding or fast rewinding.

In the above embodiments of the present disclosure, it may be appreciated that an operation on a button may be clicking or sliding, a switching speed among menu items may be determined by a clicking or sliding strength, and a switching direction among the menu items may be determined on a sliding direction. That is, in this embodiment, a parameter of detecting a button operation may be a sliding direction, a clicking duration, a number of clicking times, or a combination thereof.

In addition, in a last step of "non-operated response", a fast response may be obtained by clicking a region beside the operation region without necessity of waiting for a system response.

### Embodiment 8

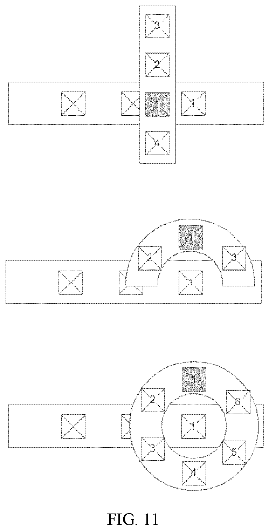

As shown in FIG. 11, in this embodiment, different manners of expanding a sub-menu are provided. FIG. 11a shows a longitudinally expanding form suitable for a condition where there are a lot of longitudinal arrangements. FIG. 11b shows a semi-ring form of expanding sub-menus which is so flexible that different directions may be arranged according to different spaces. FIG. 11c shows a ring expanding form which may be expanded around a target and may include more sub-menu items.

### Embodiment 9

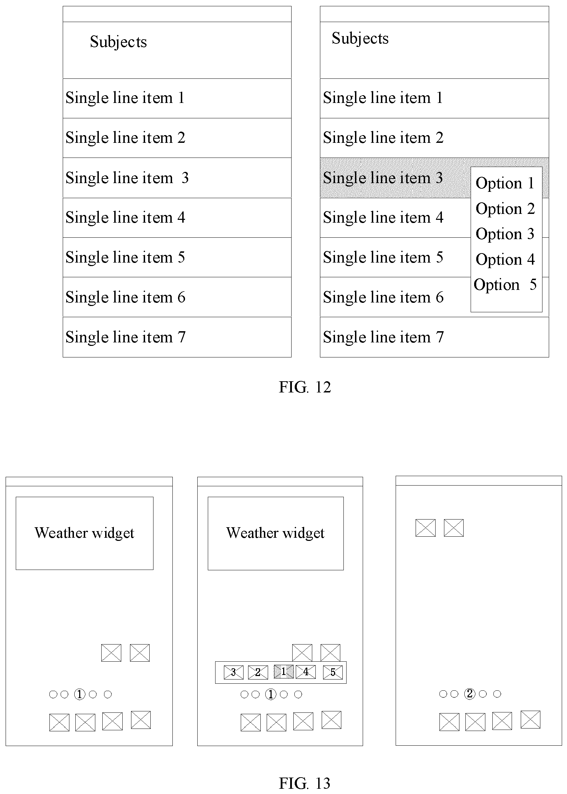

In this embodiment, an application in a common menu is described. As shown in FIG. 12, a plurality of menu item buttons is listed. A long press on one menu item by the user will result in popping-up of a corresponding sub-menu group and each item in each sub-menu of the sub-menu group will be traversed. A following process is similar to the above embodiments.

### Embodiment 10

This embodiment is an example for switching applications on a desktop. As shown in FIG. 13, the user clicks an icon button to expand a sub-menu prompt. If the user continues to click the same position of the icon button, a page 2 is switched to. Therefore, this embodiment is advantageous for saving space and fast switching.

### Embodiment 11

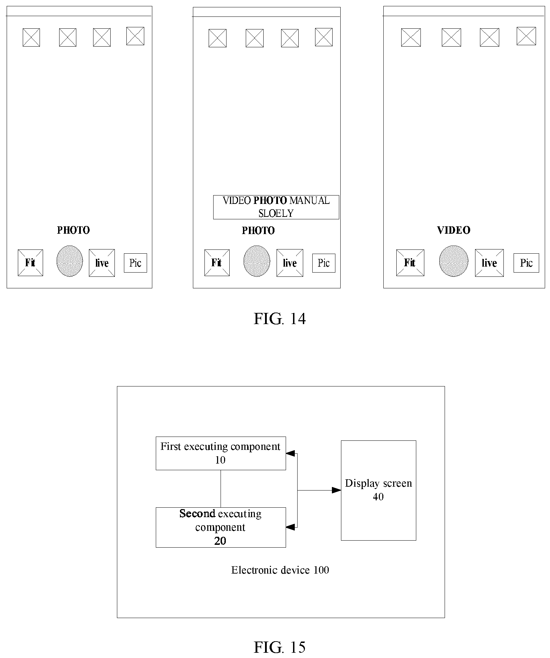

This embodiment is an example applied to camera mode switching. As shown in FIG. 14, the user may perform camera mode switching through clicking. After the user clicks a camera icon button PHOTO, a sub-menu group of a camera mode is expanded over the camera icon. The sub-menu group includes PANORAMA, VIDEO, PHOTO, MANUAL and SLOWLY. If the user clicks the camera icon button PHOTO again, the camera mode is switched to a video mode of VIDEO.

Those skilled in the art may understand that functional modules/unit in some or all steps, systems and devices in disclosed methods in the above text may be implemented as software, firmware, hardware and an appropriate combination thereof. In a hardware implementation, a division between the functional modules/units mentioned above may not correspond a division between physical components. For example, a physical component may have a plurality of functions, or one function or step may be implemented through a combination of a number of physical components. Some physical components or all physical components may be implemented as software implemented by a processor, for example, a central processor, a digital signal processor or a microprocessor, or as hardware, or as an integrated circuit, for example, an application specific integrated circuit. Such software may be arranged on a computer readable medium that may include a computer storage medium (or non-transitory medium) and a communication medium (or transitory medium). As is commonly known by those skilled in the art, the term of computer storage medium includes volatile and non-volatile, removable and non-removable media implemented in any method or technology used for storing information (such as a computer readable instruction, a data structure, a program module or other data). The computer storage medium may be, but is not limited to, an RAM, an ROM, an EEPROM, a flash memory or other storage technologies, a CD-ROM, a digital versatile disk (DVD) or another optical disc storage, a magnetic box, a cassette tape storage or another magnetic storage device, or any other medium that may be used to store expected information and is accessible by a computer. In addition, it is common knowledge by those skilled that a communication medium generally includes a computer readable instruction, a data structure, a program module or other data in such modulating data signals as a carrier or another transmission mechanism, and may include any information transmission medium.

An embodiment of the present disclosure further provides an electronic device configured to implement the above embodiments which will not be repeated herein. The term of "module" used in the following may implement a combination of software and/or hardware with predetermined functions. Although the devices described in the following embodiments are implemented by software, implementation by hardware or the combination of software and/or hardware is also conceivable.

FIG. 15 is a schematic diagram showing an electronic device structure according to an embodiment of the present disclosure. As shown in FIG. 15, the electronic device 100 includes a display screen 40, the user may perform an input operation on a virtual button on the display screen, and the display screen may display an operation procedure. The electronic device 100 further includes a first executing component 10 and a second executing component 20.

The first executing component 10 is configured to expand, around the menu control, multiple menu items corresponding to the menu control when a click operation on a menu control on a display screen interface is detected. The menu control on the display screen interface may be an icon button or a text button or the like, and a plurality of menu items may be expanded from an original position of a clicked button (i.e., the original button is displayed as one menu item thereof), or is displayed in a regular or irregular shape around the clicked button, for example, being expanded horizontally or longitudinally around the clicked button, or being expanded in a ring or circle around the clicked button.

The second executing component 20 is configured to carry out switching among exposed multiple menu items when a click operation and/or a sliding operation on the menu control are/is detected again. That is, the user only needs to perform a further operation, for example, clicking or sliding, on the original menu control, so as to switch among expanded menu items. It is not necessary to perform clicking or sliding in a plurality of regions, thereby operation frequency is improved.

It shall be noted that the above components may be implemented through software or hardware. The hardware may be implemented in but is not limited to the following manner: the above components are located in one processor, or the components are respectively located in different processors through a random combination.

In the above embodiments provided in the present disclosure, the control may be operated in a clearer and efficient manner, and the control may be compatible to a certain extent with a control operation manner in a related art, thereby a user's experience is promoted.

The above are embodiments of the present disclosure that are not to define the present disclosure. For those of ordinary skill, there may be various changes and variants to the present disclosure.

## Claims

1. A control operating method comprising:
displaying (S102) in an expanding manner, around a menu control, multiple menu items corresponding to the menu control in response to a first click operation on the menu control on a display screen; and
switching (S104) among the multiple menu items in response to one or both of a second click operation and a sliding operation on the menu control, wherein a direction in which the multiple menu items are switched to is controlled according to an incline angle of the display screen;
wherein displaying in the expanding manner, around the menu control, the multiple menu items comprises:
displaying in the expanding manner, around a position of the menu control, the multiple menu items horizontally or longitudinally, wherein one of the multiple menu items is displayed at the position of the menu control;
wherein switching among the multiple menu items displayed in the expanding manner when one or both of a click operation and a sliding operation on the menu control again comprises:
switching to a next menu item each time a click on the menu control is detected, wherein a direction prompt for switching the multiple menu items next time is displayed in a region where the multiple menu items are displayed.

2. The method according to claim 1, further comprising:
selecting a menu item latest switched to in response to not detecting an operation on the menu control within a predetermined time period, in order to execute a corresponding instruction of the menu item latest switched to.

3. The method according to claim 1, wherein a number is displayed on each of the multiple menu items; wherein the number indicates times required to click the menu control for switching to a respective menu item.

4. The method according to claim 1, after selecting the menu item latest switched to, further comprising:
retracting the multiple menu items as expanded to an initial state.

5. A storage medium, storing a computer program arranged to implement the method according to any one of claims 1 to 4 when the computer program is being executed.

6. An electronic device, comprising a storage and a processor, wherein the storage stores a computer program, and the processor is arranged to execute the computer program to implement the method according to any one of claims 1 to 4.

## Patentansprüche

1. Steuerbetriebsverfahren, umfassend:
Anzeigen (S102), in einer erweiterten Weise um eine Menüsteuerung herum, mehrerer Menüelemente, die der Menüsteuerung entsprechen, als Reaktion auf einen ersten Klickvorgang auf der Menüsteuerung auf einem Anzeigebildschirm; und
Umschalten (S104) unter den mehreren Menüelementen als Reaktion auf einen oder beide eines zweiten Klickvorgangs und eines Gleitvorgangs auf der Menüsteuerung, wobei eine Richtung, in die die mehreren Menüelemente umgeschaltet werden, gemäß einem Neigungswinkel des Anzeigebildschirms gesteuert wird;
wobei das Anzeigen, in der erweiterten Weise um die Menüsteuerung herum, der mehreren Menüelemente umfasst:
Anzeigen, in der erweiterten Weise um eine Position der Menüsteuerung herum, der mehreren Menüelemente horizontal oder längs, wobei eines der mehreren Menüelemente an der Position der Menüsteuerung angezeigt wird;
wobei das Umschalten unter den mehreren Menüelementen, die in der erweiterten Weise angezeigt werden, wenn einer oder beide eines Klickvorgangs und eines Gleitvorgangs auf der Menüsteuerung wieder durchgeführt werden, umfasst:
Umschalten zu einem nächsten Menüelement jedes Mal, wenn ein Klick auf die Menüsteuerung erkannt wird, wobei eine Richtungsaufforderung zum Umschalten der mehreren Menüelemente bei einem nächsten Mal in einem Bereich angezeigt wird, in dem die mehreren Menüelemente angezeigt werden.

2. Verfahren nach Anspruch 1, ferner umfassend:
Auswählen eines Menüelements, auf das zuletzt umgeschaltet wurde, als Reaktion darauf, dass kein Vorgang auf der Menüsteuerung innerhalb eines vorbestimmten Zeitraums erkannt wurde, um eine entsprechende Anweisung des Menüelements auszuführen, auf das zuletzt umgeschaltet wurde.

3. Verfahren nach Anspruch 1, wobei eine Anzahl auf jedem der mehreren Menüelemente angezeigt wird; wobei die Anzahl Male angibt, die erforderlich sind, um auf die Menüsteuerung zu klicken zum Umschalten auf ein jeweiliges Menüelement.

4. Verfahren nach Anspruch 1, nach dem Auswählen des Menüelements, auf das zuletzt umgeschaltet wurde, ferner umfassend:
Zurückziehen der mehreren Menüelemente, wie erweitert, in einen Anfangszustand.

5. Speichermedium, das ein Computerprogramm speichert, das angeordnet ist, um das Verfahren nach einem der Ansprüche 1 bis 4 zu implementieren, wenn das Computerprogramm ausgeführt wird.

6. Elektronische Vorrichtung, umfassend einen Speicher und einen Prozessor, wobei der Speicher ein Computerprogramm speichert und der Prozessor eingerichtet ist, um das Computerprogramm auszuführen, um das Verfahren nach einem der Ansprüche 1 bis 4 zu implementieren.

## Revendications

1. Procédé de fonctionnement de commande comprenant :
l'affichage (S102) de manière développée, autour d'une commande de menu, de multiples éléments de menu correspondant à la commande de menu en réponse à une première opération de clic sur la commande de menu sur un écran d'affichage ; et
la commutation (S104) entre les multiples éléments de menu en réponse à l'une ou aux deux parmi une seconde opération de clic et une opération de glissement sur la commande de menu, dans laquelle une direction dans laquelle les multiples éléments de menu sont commutés est commandée en fonction d'un angle d'inclinaison de l'écran d'affichage ;
dans lequel l'affichage de la manière développée, autour de la commande de menu, des multiples éléments de menu comprend :
l'affichage de la manière développée, autour d'une position de la commande de menu, des multiples éléments de menu horizontalement ou longitudinalement, dans lequel l'un des multiples éléments de menu est affiché au niveau de la position de la commande de menu ;
dans lequel la commutation entre les multiples éléments de menu affichés de la manière développée lorsque l'une ou les deux parmi une opération de clic et une opération de glissement sur le commande de menu comprend à nouveau :
la commutation vers un élément de menu suivant à chaque fois qu'un clic sur la commande de menu est détecté, dans laquelle une invite de direction pour la commutation suivante des multiples éléments de menu est affichée dans une région où les multiples éléments de menu sont affichés.

2. Procédé selon la revendication 1, comprenant en outre :
la sélection d'un élément de menu le plus récemment sélectionné en réponse à la non-détection d'une opération sur la commande de menu dans une période de temps prédéterminée, afin d'exécuter une instruction correspondante de l'élément de menu qui est le plus récemment sélectionné.

3. Procédé selon la revendication 1, dans lequel un nombre est affiché sur chacun des multiples éléments de menu ; dans lequel le nombre indique le nombre de fois qu'il faut cliquer sur la commande de menu pour commuter vers un élément de menu respectif.

4. Procédé selon la revendication 1, après la sélection de l'élément de menu le plus récemment sélectionné, comprenant en outre :
la rétractation des multiples éléments de menu tels qu'ils ont été développés jusqu'à un état initial.

5. Support de stockage, stockant un programme informatique agencé pour mettre en oeuvre le procédé selon l'une quelconque des revendications 1 à 4 lorsque le programme informatique est exécuté.

6. Dispositif électronique, comprenant un support de stockage et un processeur, dans lequel le support de stockage stocke un programme informatique, et le processeur est agencé pour exécuter le programme informatique de façon à mettre en oeuvre le procédé selon l'une quelconque des revendications 1 à 4.
